Europäisches Patentamt

European Patent Office

Office européen des brevets

(11) Veröffentlichungsnummer: **0 441 185 A1**

## (12) EUROPÄISCHE PATENTANMELDUNG

(21) Anmeldenummer: 91100869.6

(22) Anmeldetag: 24.01.91

(51) Int. Cl.5: **B65G 60/00, B65G 59/06, B65G 1/10**

(30) Priorität: **07.02.90 DE 4003661**

(43) Veröffentlichungstag der Anmeldung:
**14.08.91 Patentblatt 91/33**

(84) Benannte Vertragsstaaten:
**AT BE DE ES FR GB IT NL**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Boley, Dieter, Dr.-Ing.**
**Glemseckstrasse 8**
**W-7250 Leonberg-Eltingen(DE)**
Erfinder: **Durst, Norbert, Dipl.-Ing.**
**Hegelstrasse 25**
**W-7012 Fellbach(DE)**

(54) Speichersystem.

(57) Es wird ein Speichersystem zur vertikalen Speicherung von Paletten vorgestellt, bei dem um eine Mittelachse (A-A) über die gesamte Stapelhöhe senkrecht zur Stapelrichtung bewegbare Schieber (2) übereinander angeordnet sind, wobei die Höhe der einzelnen Schieber (2) der Höhe der einzelnen zu stapelnden Paletten (3) entspricht und das der Palette (3) zugewandte Ende des Schiebers (2) eine sich in Stapelrichtung verjüngende schräge Palettenaufnahmefläche (6) aufweist zum Angriff an mit dieser konvergierenden Palettenschräge (7) und daß in einer horizontalen Ebene mindestens zwei Schieber (2) angeordnet sind und der Abstand der in der gleichen horizontalen Ebene liegenden Schieber (2) zwischen der maximalen und der minimalen Palettenlänge durch eine synchrone Bewegung der Schieber (2) veränderbar ist.

EP 0 441 185 A1

## SPEICHERSYSTEM

Die Erfindung betrifft ein Speichersystem mit einer Eingabe und einer Entnahmeseite zur vertikalen Speicherung von Paletten gemäß Oberbegriff des Hauptanspruches.

Zur Teilebereitstellung für die unterschiedlichsten Fertigungs-und Montageprozesse werden Paletten verwendet. Nach erfolgtem Transport zwischen zwei Anlagen werden die Paletten aufgestaut oder automatisch gestapelt. Bei einem Stapelvorgang sind zwei unterschiedliche Techniken üblich. Die eine besteht in dem Anheben einer Palette, dem Unterschieben einer zweiten unter die angehobene und anschließendem Wiederaufsetzen der oberen auf die unten zugeführte Palette. Anschließend werden die beiden vorhandenen Paletten angehoben, eine weitere untergeschoben und die beiden oberen wieder abgesenkt. Das Entnehmen eines Teiles geht in umgekehrter Reihenfolge vor sich. Für viele Anwendungen ist es bei diesem Stapelvorgang jedoch nachteilig, daß die in den Stapel eingebrachte Palette erst als letzte wieder entnommen werden kann (first in, last out). Bei einer anderen bekannten Technik des Stapelvorganges wird ein Stapel durch ein Aufeinanderschichten von Paletten gebildet. Auf eine erste Palette wird eine zweite von oben draufgesetzt, die dritte auf die zweite usw. Beim Entnehmen kann das oben beschriebene Verfahren, den ganzen Stapel ohne die unterste Palette anzuheben, angewandt werden und damit die Reihenfolge gewahrt bleiben (first in, first out). Ein derartiger Speicher ist beispielsweise aus der Firmendruckschrift Tegel-Technik "Automatik Stapel und Füllstation" bekannt. Der Nachteil derartiger Verfahren, bzw. auch anderer Mischformen der oben beschriebenen Verfahren, liegt in der sich mit dem Füllungsgrad des Speichers ständig ändernden oberen Zuführ- bzw. Entnahmeposition. Unterschiedliche Positionen einer Stapelhöhe können durch Handhabungseinrichtungen, die gegebenenfalls mit Sensoren ausgestattet sind, ausgeglichen werden. Das bedeutet aber einen zusätzlichen Aufwand und damit eine Kostenerhöhung. Dies ist nachteilig.

Aufgabe der vorliegenden Erfindung ist, ein gattungsgemäßes Speichersystem so auszugestalten, daß bei einer einfachen und gebrauchsvorteilhaften Bauform die Ein- und Ausgabepositionen immer gleichbleiben, gleichzeitig aber die Reihenfolge der aufgegebenen Paletten gewahrt bleibt (first in, first out).

Diese Aufgabe ist durch die im Kennzeichen des Hauptanspruches angegebenen Merkmale gelöst. Die Unteransprüche geben vorteilhafte Weiterbildungen an.

Danach sind für das Speichersystem mehrere, um eine in Stapelrichtung verlaufende Mittelachse angeordnete Schieber vorgesehen. Die Schieber sind senkrecht zur Stapelrichtung bewegbar. Die Bewegung der Schieber erlaubt die Abstandsänderung zwischen in einer horizontalen Ebene liegenden Schiebern. Dadurch können die aufgenommenen Paletten von oben nach unten abgesenkt werden. Die den Paletten zugewandten Enden der Schieber sind mit einer schrägen Palettenaufnahmefläche versehen. Diese schräge Palettenaufnahmefläche entspricht der an der Palette vorgesehenen Schräge. Die Paletten können durch die Bewegung und die Ausgestaltung der Schieber von oben nach unten befördert werden, gleitend an den Schrägen. Die zu stapelnden Paletten können bis zum Ende des Speichersystems abgesenkt werden, sie können aber auch durch die Schieber in einer bestimmten Position festgehalten werden, welche den peripheren Zuführ- bzw. Austragseinrichtungen gerecht ist. Das erfindungsgemäße Speichersystem ermöglicht auch die Beibehaltung einer stets gleichbleibenden Ein- und Ausgabeposition der Paletten, unabhängig von der Höhe des Palettenstapels. Diese Möglichkeit der steten Anpassung des Speichersystems an die peripheren Bediengeräte ist besonders vorteilhaft. Weiterhin ist es besonders vorteilhaft, daß die Anzahl der Schieber in Stapelrichtung und in einer horizontalen Ebene variiert werden kann. Durch die erste Variationsmöglichkeit, ist die Höhe des Speichersystems beliebig erweiterbar; durch die Möglichkeit des Einsatzes verschiedener Schieber in horizontaler Richtung, ist die Möglichkeit des Einsatzes verschiedener Paletten gegeben.

Gemäß der vorteilhaften Ausgestaltung nach Anspruch 2 befinden sich die Palettenschrägen an zwei aneinander gegenüberliegenden Seitenwänden der Palette.

Weitere vorteilhafte Ausgestaltung betrifft die Erstreckung der Palettenschräge über die gesamte Palettenhöhe. Wichtig ist, daß der Absenkvorgang der Palette nicht zu schnell erfolgt. Deshalb sollte die Schräge der Palette sowie die Schräge der Palettenaufnahmefläche des Schiebers so hoch wie möglich sein. Diese maximale Höhe wird erreicht, wenn sich die Schrägen über die gesamte Palettenhöhe erstrecken.

Gemäß einer weiteren vorteilhaften Ausgestaltung der Erfindung erstrecken sich die Palettenschrägen über die gesamte Breite der Palette. Diese Ausgestaltung ist besonders bei schweren Paletten vorteilhaft, die besonders achtsam abgesenkt werden sollen.

In manchen Fällen kann es vorteilhaft sein, wenn sich die Schrägen nur teilweise über die Breite der Palette erstrecken. Dies kann besonders dann der Fall sein, wenn die Palette eine breite Abstützfläche für andere Montage- bzw. Fertigungsprozesse benötigt.

Die Entnahmeseite des Speichersystems kann vorteilhafterweise mit einer Austragseinrichtung, z.B. einem Förderband ausgestattet sein.

Gemäß einer weiteren vorteilhaften Ausgestaltung der Erfindung können die Palettenaufnahmeflächen der Schieber wahlweise mit Rollen versehen werden. Dies kommt besonders dann zum Tragen, wenn bei anliegenden Schieber Paletten ein- oder ausgeschoben werden sollen.

Eine weitere vorteilhafte Ausgestaltung der Erfindung betrifft eine Vorrichtung, die die Bewegung der Schieber verursacht. Besonders vorteilhaft ist das Vorsehen einer, entlang einer Führung bewegbaren Kulisse, die ermöglicht, daß die Schieber unabhängig vom Füllungsgrad des Speichersystems bewegt werden können.

Gemäß einer bevorzugten Ausführungsform nach Ansprüchen 9 und 10 können die Schieber federnd gelagert sein, vorzugsweise mittels Druckfedern, um die Paletten durch ihr Eigengewicht mit einstellbarer Geschwindigkeit absinken zu lassen. Diese Ausgestaltung ist besonders preisgünstig, da sie keine weitere Regelung der Schieberbewegung erfordert.

Die Erfindung wird anhand der nachstehenden Figuren an einem Ausführungsbeispiel näher erläutert. Es zeigen:

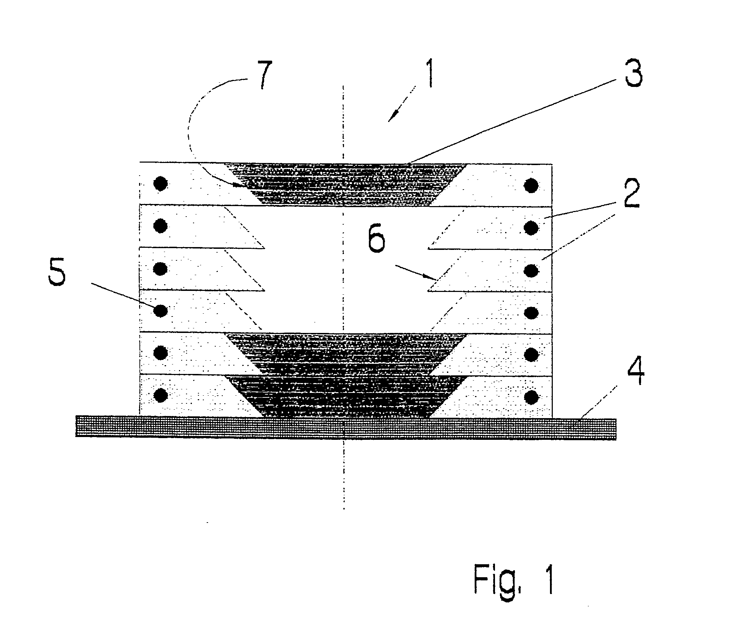

Fig. 1:    Ein Speichersystem und seine Grundelemente

Fig. 2:    Ein Speichersystem bei dem die Bewegung der Schieber über eine Kulisse erfolgt

Fig. 3:    Eine Darstellung eines Speichervorganges

Fig. 4:    Fortsetzung eines Speichervorganges, wenn der Füllungsgrad nicht automatisch erkannt wird.

Fig. 5:    Ein Speichersystem mit in Speicheraufnahmeflächen integrierten Rollen

Fig. 6 bis 9:    Verschiedene Ausgestaltungen der Schieber und der Paletten

Das erfindungsgemäße Speichersystem 1 weist Schieber 2, Paletten 3 und eine Austragseinrichtung 4 auf. Die Schieber 2 sind über Nocken 5 bewegbar. Jeder Schieber 2 weist eine Palettenaufnahmefläche 6 auf. Diese verläuft schräg und verjüngt sich in Stapelrichtung. Jede Palette 3 weist eine Palettenschräge 7 auf. Die Schrägen 7 der Paletten 3 und die Palettenaufnahmeflächen 6 der Schieber 2 konvergieren miteinander. Die Entnahmeseite des Stapelspeichersystems kann eine Austragsvorrichtung 4, z.B. in Form eines Bandes, aufweisen. Die unterste Palette 3 kann in diesem Fall nach dem Ablegen auf das Band sofort abtransportiert werden.

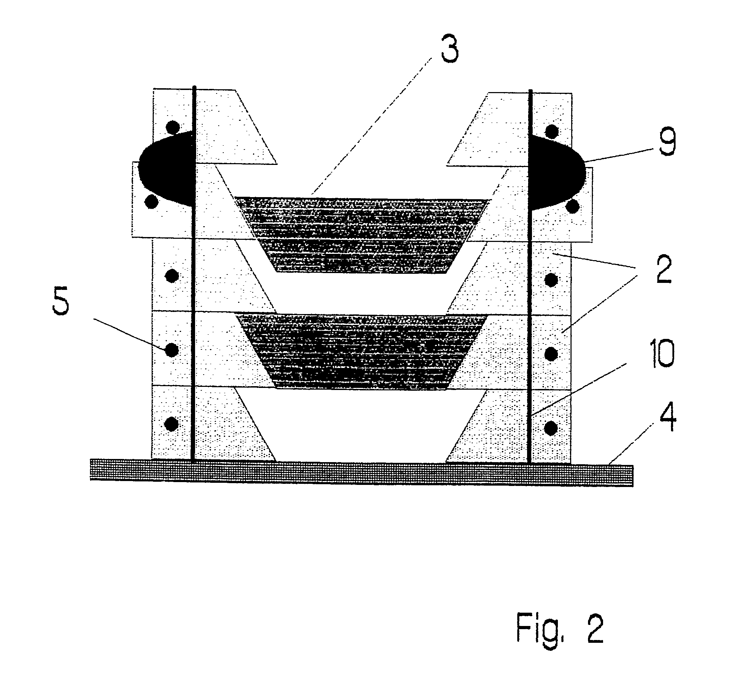

Eine Variante des Bewegungsmechanismusses, der Schieber 2 ist in Fig. 2 dargestellt. Danach erfolgt die Betätigung eines einzelnen Schiebers 2 über eine Kulisse 9, die entlang einer Führung 10 bewegt werden kann, und über die Nocke 5 so, daß sich die Palette 3 im Speicher jeweils um eine Schieber/Palettenhöhe absenkt.

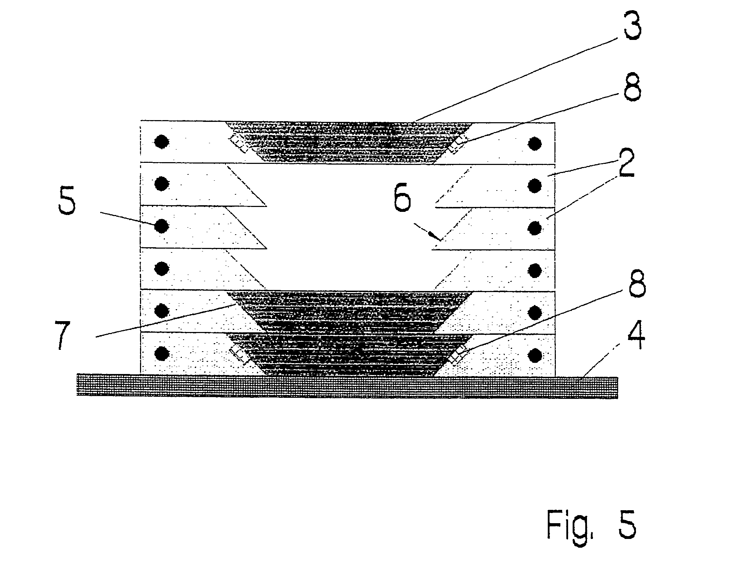

Wie in Fig. 5 näher dargestellt ist, können in den Palettenaufnahmeflächen 6 der Schieber 2 wahlweise Rollen 8 integriert werden. Diese Rollen 8 ermöglichen, daß bei anliegenden Schiebern 2 die Paletten 3 ein- oder ausgeschoben werden können.

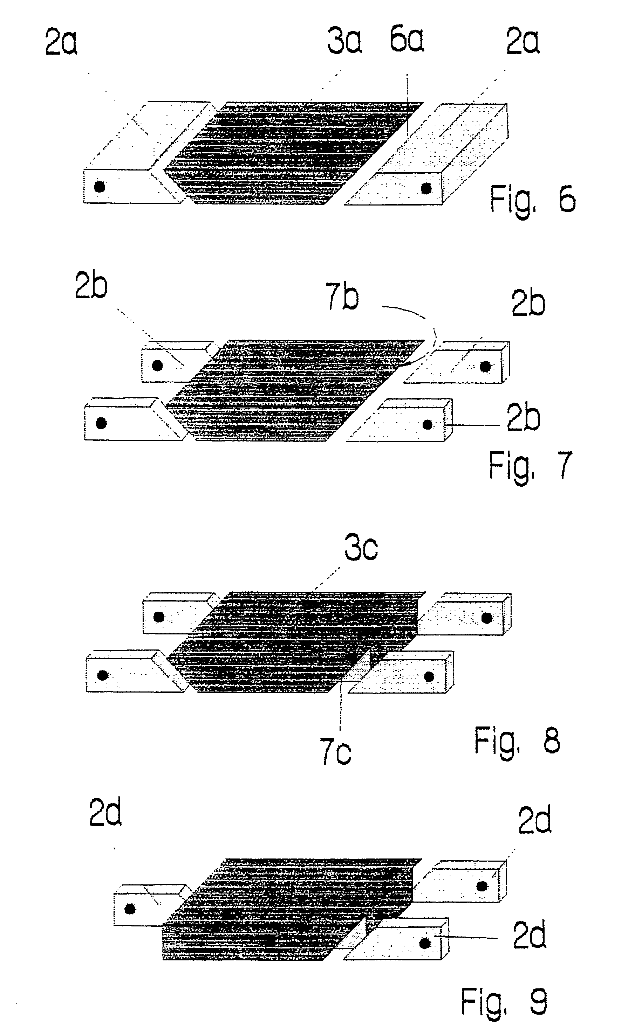

Wie in Fig. 6 bis 9 näher erläutert ist, können die Schieber 2 und die Paletten 3 verschiedene Formen aufweisen. Es können in einer horizontalen Ebene zwei Schieber 2a angeordnet werden, die über die gesamte Breite der Palette 3a verlaufende Palettenaufnahmeflächen 6a aufweisen. Wie in Fig. 7 dargestellt, können in einer horizontalen Ebene auch zwei schmale Schieberpaare 2b angeordnet werden, die nur partiell zum Angriff mit der über die gesamte Palettenbreite verlaufenden Palettenschräge 7b kommen. In Fig. 8 ist eine andere Ausführungsform der aufzunehmenden Palette 3c dargestellt, wobei die Schrägen 7c der Palette 3c nur Abschnitte der gegenüberliegenden Palettenseitenwände über ihre Breite einnehmen. In Fig. 9 ist eine Anordnung mit drei Schiebern 2d dargestellt.

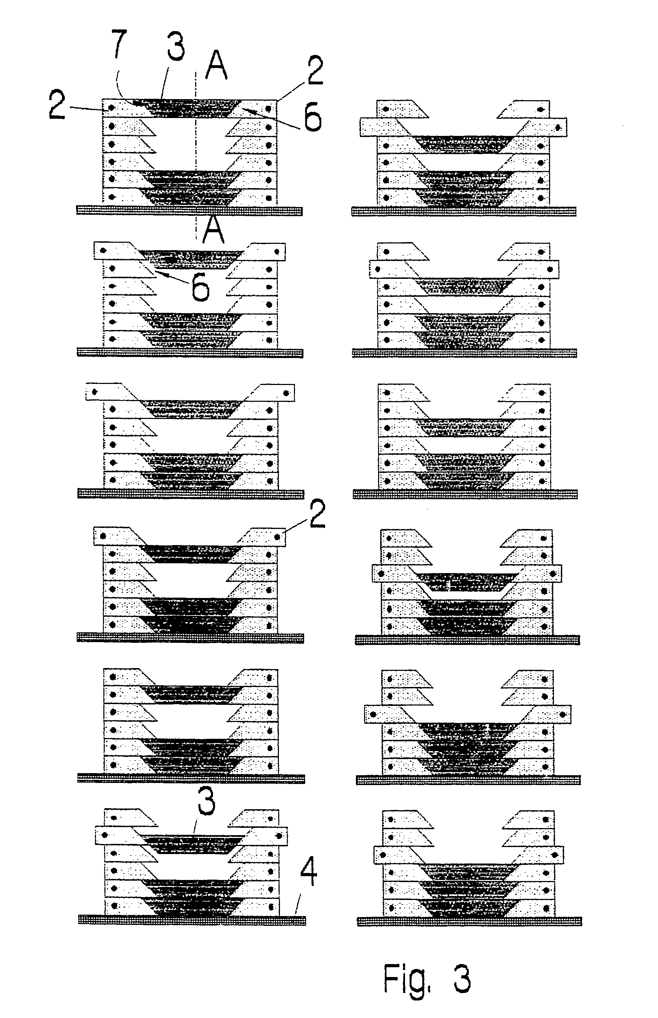

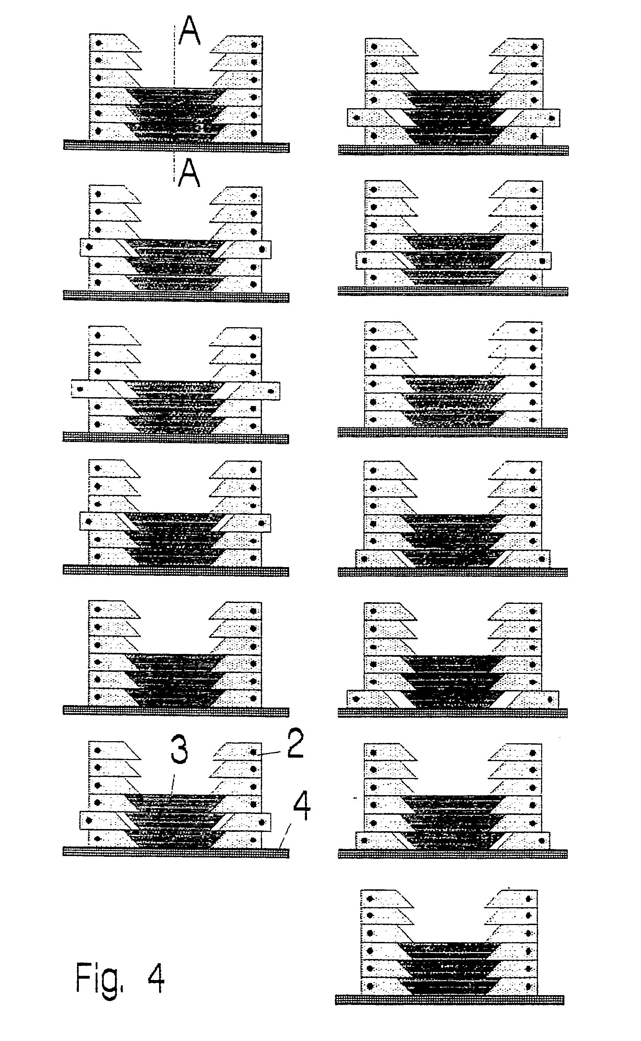

Der Speichervorgang des erfindungsgemäßen Speichersystems, ist in Bild 3 und 4 dargestellt. Die Palette 3 wird auf der Eingabeseite auf Schieber 2, die in einer horizontalen Ebene von beiden Seiten der Mittelachse A-A angeordnet sind, aufgegeben. Die Palette 3 stützt sich dabei mit ihrer Palettenschräge 7 an den schrägen Palettenaufnahmeflächen 6 der Schieber 2 ab. Über Nocken 5 werden jetzt die Schieber 2 auseinanderbewegt in Richtung von der Mittelachse A-A weg, solange bis die Palette 3 so weit abgesenkt ist, daß sie sich an den Palettenaufnahmeflächen 6 des darunterliegenden Schieberpaares abstützt. Danach wird das erste Schieberpaar in seine Ausgangsposition zurückgefahren. Ist dieser Vorgang abgeschlossen, so beginnt die Bewegung des Schieberpaares an dem die Palette 3 abgestützt ist. Dieser Vorgang wird solange wiederholt, bis die Palette 3 ihre vorgesehene Position, entweder auf der Austragseinrichtung 4 ganz unten oder auf einer anderen Palette 3 erreicht hat. Der Vorgang des Absenkens einer Palette 3 kann, wenn der Füllungsgrad des Speichers automatisch erkannt wird, mit der letzten Darstellung in Fig. 3 abgeschlossen werden. Wird der Füllungsgrad des Speichers nicht automatisch erfaßt, können die Schieberbewegungen problemslos, wie in Fig. 4 dargestellt, bis zum untersten Schieber fortgesetzt werden. Diese Bewegungen haben dann allerdings keinerlei Funktionen.

Sollte nach Abschluß des Speichervorganges der gesamte Palettenstapel entnommen werden, so können die Schieber 2 gleichzeitig auseinander gefahren werden. Es besteht auch die Möglichkeit der Entnahme einzelner Paletten 3. In diesem Fall können die einzelnen Schieber 2 unabhängig voneinander auseinander gefahren werden.

**Patentansprüche**

1. Speichersystem mit einer Eingabe- und einer Entnahmeseite zur vertikalen Speicherung von Paletten durch Aufeinanderschichtung als Palettenstapel mit variabler Palettenzahl, **dadurch gekennzeichnet**, daß um eine in Stapelrichtung verlaufende Mittelachse (A-A) des Speichersystems (1) über die gesamte Stapelhöhe senkrecht zur Stapelrichtung bewegbare Schieber (2) übereinander angeordnet sind, wobei die Höhe der einzelnen Schieber (2) der Höhe der einzelnen zu stapelnden Paletten (3) entspricht und das der Palette (3) zugewandte Ende des Schiebers (2) eine sich in Stapelrichtung verjüngende schräge Palettenaufnahmefläche (6) aufweist zum Angriff an mit dieser konvergierenden Palettenschräge (7) und daß in einer horizontalen Ebene mindestens zwei Schieber (2) angeordnet sind und der Abstand der in der gleichen horizontalen Ebene liegenden Schieber (2) zwischen der maximalen und der minimalen Palettenlänge durch eine synchrone Bewegung der Schieber (2) veränderbar ist.

2. Speichersystem nach Anspruch 1, **dadurch gekennzeichnet**, daß die Palettenschrägen (7) sich an zwei einander gegenüber liegenden Seitenwänden der Palette (3) befinden.

3. Speichersystem nach Anspruch 2, **dadurch gekennzeichnet**, daß die Schrägen (7) sich über die gesamte Palettenhöhe erstrecken.

4. Speichersystem nach Anspruch 3, **dadurch gekennzeichnet**, daß die Schrägen (7b) sich über die gesamte Palettenbreite der Palette (3) erstrecken.

5. Speichersystem nach Anspruch 3, **dadurch gekennzeichnet**, daß die Seitenwände der Paletten (3c) über ihre Breite teilweise mit Schrägen (7c) versehen sind.

6. Speichersystem nach Anspruch 1, **dadurch gekennzeichnet**, daß die Entnahmeseite mit einer Austragseinrichtung (4) versehen ist.

7. Speichersystem nach Anspruch 1, **dadurch gekennzeichnet**, daß in die Plattenaufnahmeflächen (6) der Schieber (2) wahlweise Rollen (8) integriert sind.

8. Speichersystem nach Anspruch 1, **dadurch gekennzeichnet**, daß an den der Palettenaufnahmeflächen (6) abgewandten Enden der Schieber (2) eine, in Stapelrichtung verlaufende Führung (10) vorgesehen ist, entlang welcher eine, die Bewegung der Schieber verursachende Kulisse (9) bewegbar angeordnet ist.

9. Speichersystem nach Anspruch 1, **dadurch gekennzeichnet**, daß die Schieber (2) federnd gelagert sind.

10. Speichersystem nach Anspruch 9, **dadurch gekennzeichnet**, daß die Schieber (2) mit Gasdruckfedern ausgerüstet sind.

Fig. 1

Fig. 2

Fig. 3

Fig. 4

Fig. 5

Fig. 6

Fig. 7

Fig. 8

Fig. 9

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| A | FR - A1 - 2 557 548 (UNION DES COOPERATIVES) * Gesamt * -- | 1 | B 65 G 60/00 B 65 G 59/06 B 65 G 1/10 |
| A | GB - A - 1 586 858 (UNILEVER LIMITED) * Gesamt * -- | 1 | |
| A | GB - A - 2 019 821 (GUGLIELMO MARTELLI) * Fig. 1 * ---- | 1 | |

| RECHERCHIERTE SACHGEBIETE (Int Cl⁵) |
|---|
| B 65 G |

Der vorliegende Recherchenbericht wurde für alle Patentansprüche erstellt

| Recherchenort | Abschlußdatum der Recherche | Prüfer |
|---|---|---|
| WIEN | 26-04-1991 | PISSENBERGER |